# EUROPEAN PATENT SPECIFICATION

(11) **EP 2 134 151 B1**
(45) Date of publication and mention of the grant of the patent: **28.07.2010**
(21) Application number: 08741882.8
(22) Date of filing: 04.04.2008
(51) Int. Cl.: A01C 5/06, A01C 7/20

(54) **DEVICE FOR COUPLING OF SUPPORT WHEELS AT AN AGRICULTURAL MACHINE**
VORRICHTUNG ZUR VERBINDUNG VON STÜTZRÄDERN AN EINER LANDWIRTSCHAFTLICHEN MASCHINE
DISPOSITIF D'ACCOUPLEMENT DE ROUES DE SUPPORT D'UNE MACHINE AGRICOLE

(30) Priority: 05.04.2007 SE 0700862
(43) Date of publication of application: 23.12.2009
(73) Proprietor: Väderstad-Verken AB, 590 21 Väderstad (SE)
(72) Inventor: GILSTRING, Gert, S-590 21 Väderstad (SE); BOGREN, Tommy, S-578 91 Aneby (SE)
(74) Representative: Karlsson, Leif Karl Gunnar
(86) International application number: PCT/SE2008/050392
(87) International publication number: WO 2008/123829

(56) References cited:
- US-A- 4 356 780
- US-A- 6 148 747
- US-A1- 2005 155 536

## Description

### TECHNICAL AREA

The invention refers to an agricultural machine comprising at least one soil cultivating device comprising a seed furrow forming means, for forming a seed furrow in soil over which the agricultural machine moves, and a first and a second support wheel, in addition to which the agricultural machine comprises at least one seed out feeding device for distributing seeds to the seed furrow, in addition to which the support wheels are coupled to each other via a coupling device arranged so that if the first support wheel moves at least partly upwards in relation to the seed furrow forming means, then the second support wheel moves at least partly downwards in relation to the seed furrow forming means, and vice versa, wherein the coupling device is adapted to provide a gearing such that at movement of the support wheels in relation to the seed furrow forming means, a vertical component of the speed in relation to the seed furrow forming means of the higher disposed support wheel is greater than a vertical component of the speed in relation to the seed furrow forming means of the lower disposed support wheel.

### BACKGROUND

An agricultural machine of the type 'precision seed drill' (US Eng. planter) is moved, usually towed by a tractor, over the soil that is to be drilled, and comprises a plurality of, in the lateral direction of the machine distributed, row sowing entities, each one adapted to form a seed furrow in the direction of travel of the machine, and to place a row of seeds in the seed furrow. In order to create good conditions for the crop and yields it is important that the seeds are placed at a constant, uniform distance from each other. It is also of great interest that the depth of the seed furrows is varied as little as possible.

There is also a desire to be able to maintain a high driving speed at sowing, since the time requirements decreases. However problems at previously known solutions with uneven seed distribution mean that the driving speed must be kept relatively low.

Patent documents US5235922 and US4423788 each describe a soil cultivating device that is adapted to form a seed furrow by means of two discs each rotatable in its own direction. The soil cultivating device is carried by two support wheels disposed on each side of the pair of discs. The support wheels are fastened at carrying arms that extend from the wheel axles backwards and upwards. The carrying arms are via a linkage device coupled to each other to make possible a bogie-effect between the support wheels in such a way that if one support wheel moves upwards then the second support wheel moves downwards. In this way the dependence of sowing depth D on soil irregularities is decreased, and the load is distributed primarily equally between the support wheels. However it has been shown that even at use of such solutions, relatively large variations in the depth of the seed furrows and an uneven seed distribution in the seed furrows are not infrequently obtained, especially at relatively high speeds for the machine.

US2005/0155536A1 1 describes an agricultural machine where two support wheels are distributed on each side of respective seed furrow forming means in the form of a pair of discs. Furthermore additional support wheels are disposed behind the pair of discs. All support wheels are coupled to each other so that if one fore support wheel is raised, in relation to the pair of discs, by a way ¾ H, then the other fore support wheel is lowered, in relation to the pair of discs, by ¼ H. A disadvantage with this solution is that with the oncoming support wheels behind the pair of discs, the vertical position of the pair of discs, and thereby the sowing depth, comes to be influenced by movements of the behind-lying support wheels. This means that soil irregularities at a relatively long distance behind the pair of discs come to influence the sowing depth, which is not desirable.

### SUMMARY

One aim with the invention is to decrease variations in depth of the seed furrows at sowing with an agricultural machine of the type precision seed drill.

Another aim with the invention is to decrease the time requirement at sowing with an agricultural machine of the type precision seed drill.

An additional aim with the invention is to permit higher driving velocities at sowing with an agricultural machine of the type precision seed drill.

Yet another aim with the invention is to decrease shock loads on an agricultural machine of the type precision seed drill at soil irregularities.

Another aim with the invention is to achieve a uniform placement of seeds with an agricultural machine of the type precision seed drill.

An additional aim with the invention is to achieve a uniform placement of seeds with an agricultural machine of the type precision seed drill, even at relatively high speeds for the agricultural machine.

Yet another aim with the invention is to achieve with a relatively simple device small variations in depth of the seed furrows at sowing with an agricultural machine of the type precision seed drill.

These aims are achieved with an agricultural machine of the initially described type wherein the mentioned gearing is such that the difference between the mentioned vertical components of speeds of the support wheels in relation to the seed furrow forming means increases when the height difference between the support wheels increases.

The coupling device according to the invention is adapted to provide a gearing such that a vertical component of the movement, in relation to the seed furrow forming means, of the support wheel that moves upwards from the neutral position is greater than a vertical component of the movement, in relation to the seed furrow forming means, of the support wheel that moves downwards from the neutral position.

The invention is especially suitable for agricultural machines with soil cultivating devices where the support wheels are disposed on each side of the seed furrow forming means, and results in the following: In a case where one of the support wheels rolls over an eminence on the soil surface, the seed furrow forming means (on condition that the wheel that is moving downwards in relation to the seed furrow forming means remains at essentially the same height in relation to the surroundings), comes to move upwards, in relation to the soil, by a way that is considerably smaller than half the vertical displacement in relation to the soil of the wheel that rolls over the eminence. This decreases to a high degree variations in depth of the seed furrow.

At solutions according to the invention, in addition to the vertical movement of the seed furrow forming means, there is also a decrease in the vertical movement of other parts of the soil cultivating device on which the seed furrow forming means is mounted. The decreased vertical movement also brings about essentially decreased maximum vertical speed of the soil cultivating device at irregularities on the soil surface. A decreased maximum vertical speed brings about a decrease in variations in the vertical speed. A varied vertical speed results in the seeds acquiring different exit speed down towards the soil and therefore acquiring different deviations in their placement along the seed furrow. Thus the decrease in the vertical speed results in the distribution of the seeds in the seed furrow becoming essentially more even. Since the vertical speed of the soil cultivating device at soil irregularities is approximately linearly proportional to the speed of the agricultural machine over the soil, the driving speed at sowing can increase, which means that the time requirement decreases.

The decreased vertical speed also brings about essentially decreased maximum vertical acceleration of the soil cultivating device at irregularities in the soil. This decreases strains caused by forces of inertia on the soil cultivating device, which decreases wear and costs for use of the agricultural machine, and increases the possibility of a higher driving speed. In addition, as is described more closely below, the load on the wheel that is raised by a soil eminence is decreased. This decreases the loads on the suspension device, rim, bearings and tyres etc. of the overrunning wheel.

The invention means that the greater the height difference between the support wheels, the greater the vertical component of the movement, in relation to the seed furrow forming means, of the higher disposed support wheel in relation to the vertical component of the movement, in relation to the seed furrow forming means, of the lower disposed support wheel. E.g. the support wheels near a neutral position, in which the support wheels are disposed in the same vertical position, can move upwards and downwards, respectively, approximately an equal amount, but when they are disposed far from the neutral position a large movement, in relation to the seed furrow forming means, of the upper wheel is responded to by a small movement, in relation to the seed furrow forming means, of the lower wheel.

With the invention it is possible to decrease variations in the depth of the seed furrow, with a considerably simpler and better device than that described in mentioned US2005/0155536A1. The seed furrow forming means can be carried primarily only by the first and the second support wheel. More specifically, the invention makes it possible to achieve, with only two support wheels for each pair of discs, a great difference in movement between the support wheels at high height differences. With the invention this can be achieved while all (two) support wheels are arranged beside the pair of discs, which means that the sowing depth is influenced in the first instance by soil irregularities in the vicinity of the pair of discs. Furthermore a solution with fewer support wheels controlling the sowing depth results in fewer occasions of running into irregularities. Thus the invention can achieve a simpler construction (fewer support wheels) with better depth holding independent of soil irregularities in the longitudinal direction of the machine, i.e. a lower risk for great deviations in the sowing depth.

Preferably the coupling device comprises a respective first and second coupling member which are swingable around a respective coupling member axle and which are connected with the first and second support wheel, respectively, at their respective wheel axle, in addition to which the coupling device also comprises a swivelling arranged linkage member which is in connection with the first and second coupling member, respectively.

As is described more closely below the linkage member can be swivelling arranged around a linkage swing centre for the linkage member, in the preferred embodiment described below also called the linkage member axle. Furthermore the linkage member can be in connection with the first and the second coupling member, respectively, through direct contact or via a respective intermediate-lying member that is jointedly connected with the linkage member and the respective coupling member.

The position of the linkage swing centre can be fixed in relation to the coupling member axles and the seed furrow forming means. Alternatively the linkage swing centre can be adapted at swing movement of the linkage member to displace itself in relation to the coupling members, while the distance between a portion of the linkage member at the linkage swing centre and the coupling member axles can be primarily constant during swing movement of the linkage member.

Preferably the linkage member is in connection with a first and second attachment contact area, respectively, of the first and second coupling member, respectively, and the coupling device is arranged so that the linkage member, at a movement upwards from the neutral position of the first support wheel, executes a swing movement wherein the movement of the first attachment contact area is greater than the movement of the second attachment contact area, and vice versa. (The expression vice versa means here that the linkage member, at a movement upwards from the neutral position of the second support wheel, executes a swing movement wherein the movement of the second attachment contact area is greater than the movement of the first attachment contact area.)

Such embodiments provide a simple and hardwearing device for the above described difference in vertical speeds of the support wheels, in relation to the seed furrow forming means, at the bogie-effect of the support wheels, which for their function do not require more parts than those found at simple known support wheel bogie-arrangements for agricultural machines of the actual type.

Preferably the gearing is provided by the coupling device such that, at respective movements of the support wheels from the neutral position to a respective position in which a distance in a vertical direction between the centres of the support wheels is 50 mm, the vertical component of the movement, in relation to the seed furrow forming means, of the support wheel that moves upwards is at least 15% greater than the vertical component of the movement, in relation to the seed furrow forming means, of the support wheel that moves downwards.

Preferably thereby, in embodiments in which the linkage member in the mentioned way is in connection with a respective attachment contact area of the respective coupling member, the movement of the attachment contact area of the coupling member with which the upward-moving support wheel is connected is at least 15% greater than the movement of the attachment contact area of the coupling member with which the downward-moving support wheel is connected.

With such gearings is achieved an essential decrease in the vertical movement of the seed furrow forming means, as is an essential decrease in the vertical movement of other parts of the soil cultivating device on which the seed furrow forming means is mounted, which in the mentioned way results in the distribution of the seeds in the seed furrow being essentially more even, and/or that the driving speed at sowing can increase.

At agricultural machines of the actual type the respective coupling member, on which a respective support wheel is mounted, is normally swingable in a plane that is parallel with, or orientated at a small angle to, a vertical plane that is parallel to the intended direction of travel of the agricultural machine. Thereby, the connection between the linkage member and the respective attachment contact area of the respective coupling member can be such that the linkage member displays a first and a second linkage contact area, in which the linkage member is in direct contact with the first and the second attachment contact area, respectively. Preferably the distance between the linkage swing centre and the first linkage contact area, and the distance between the linkage swing centre and the second linkage contact area is primarily similar. The linkage swing centre should be disposed, at least when the support wheel is on the same level, viewed in the across direction of the agricultural machine, between the linkage contact areas.

Preferably, where the linkage member displays a first and a second linkage contact area, in which the linkage member is in connection with the respective first and second attachment contact area, the first and the second linkage contact area display at least one first and at least one second centre of curvature, respectively, wherein the linkage swing centre is disposed at a distance from a conceptual line which extends through the first and the second centre of curvature. Thereby the respective first and second attachment contact area preferably extend essentially straight in the respective directions across their respective directions of movement at movements of the support wheels. Thereby the first and the second attachment contact area are preferably planar or single-knuckled.

The linkage contact areas in this embodiment can be single-knuckled or double-knuckled. For simplicity in this presentation, especially in embodiments with double-knuckled linkage contact areas, it is considered that the knuckling of a contour of the respective linkage contact area as this appears when the linkage member is projected in a plane towards which the direction of an axle, at the linkage swing centre, around which the linkage member swings, is normal.

In cases where the linkage contact areas are single-knuckled or double-knuckled they can have an essentially constant knuckling, or a knuckling that varies within the respective linkage contact area. Thus, in cases with varying knuckling, the positions of the centre of curvature for separate positions within the respective linkage contact area can be varied relative to each other.

In certain embodiments the respective linkage contact area can comprise at least one protruding corner against which the respective attachment contact area can abut. Thereby each corner displays a centre of curvature that is disposed close to or in the corner.

Such a linkage member, at which the linkage swing centre in the mentioned way is disposed at a distance from a conceptual straight line which extends through the first and the second centre of curvature, contributes, in a way that is described more closely below, to limit the vertical movement of the discs, and thus to the dependence of sowing depth on soil irregularities being limited.

Preferably the linkage swing centre is disposed at an essential distance from a conceptual straight line which extends through the first and the second centre of curvature.

For achievement of the desired above described difference in vertical speeds of the support wheels, in relation to the seed furrow forming means, at bogie-effect of the support wheels, the coupling device is preferably arranged so that, when the support wheels are disposed on the same level, the linkage swing centre is disposed farther away than the centre of curvature in the direction of movement of a linkage knuckling area at an upward-moving movement of the corresponding support wheel.

### DRAWING SUMMARY

The invention will be described below in detail with reference to the drawings, in which
- Fig. 1 shows a perspective view of a precision seed drill 1, seen obliquely from above and obliquely from the rear, according to a preferred embodiment of the invention,
- Fig. 2 shows a side view of a soil cultivating device, a seed out feeding device and a seed container, that are parts of the precision seed drill in Fig. 1,
- Fig. 3 shows a view from above of a part of the soil cultivating device viewed along a section along the line III-III in Fig. 2, at forcing by a soil eminence,
- Figs. 4a and 4b show a portion of the part of the soil cultivating device that is shown in Fig. 3,
- Fig. 4c shows the portion in Figs. 4a and 4b, with neighbouring parts,
- Fig. 5 shows a side view of the soil cultivating device, the seed out feeding device and seed container in Fig. 2 at forcing by the soil eminence,
- Fig. 5a shows a side view corresponding to that shown in Fig. 5, at an upward-moving movement of a support wheel on the soil cultivating device,
- Fig. 6 shows, in a view corresponding to the view in Fig. 4c, an alternative embodiment of the invention, and
- Fig. 7 shows a perspective view of a part of a soil cultivating device according to yet another embodiment of the invention.

### DETAILED DESCRIPTION

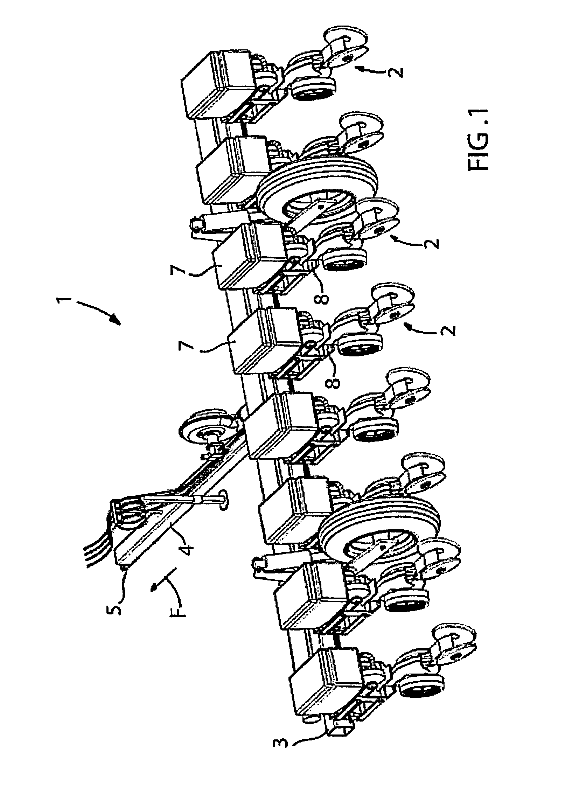

Fig. 1 shows a perspective view of an agricultural machine in the form of a precision seed drill 1 according to a preferred embodiment of the invention. The precision seed drill comprises a number, in this example eight, of row sowing entities 2, each fastened on a structural member 3 in the form of a steel beam, and each one fixedly connected with a seed container 7 and a seed out feeding device 8. It should be mentioned that the invention is also applicable on agricultural machines which display a shared seed out feeding device 8 for several soil cultivating devices 2.

The precision seed drill is, by means of a fastening member 5 arranged at at least one free end of a longitudinal structure detail 4, adapted to be coupled behind a draught vehicle and brought in a direction indicated by the arrow F in Fig. 1. Each one of the row sowing entities 2 is adapted at movement of the machine 1 over the soil that is to be sown to form a seed furrow in the direction of travel of the machine, and the seed out feeding device 8 is adapted to thereby place one seed at a time along the seed furrow in order to form a row of seeds in the direction of travel F of the machine.

In this presentation, where the machine or one of its parts is described in relation to a horizontal plane, a vertical plane, a horizontal direction or a vertical direction, this shall be understood as that the machine is disposed on plane ground and is normally mounted behind a draught vehicle. By the cross-running direction of the machine is meant a direction which is perpendicular to the intended direction of travel F of the machine and parallel to the horizontal plane.

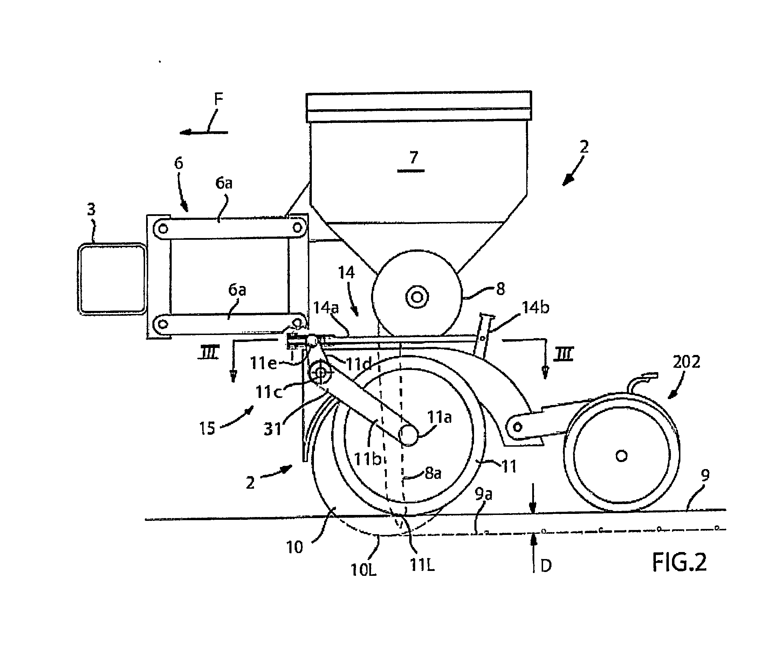

Fig. 2 shows a side view of a combination of one of the soil cultivating devices 2, one of the seed containers 7 and one of the seed out feeding devices 8. Such a combination is here also called row sowing entity. This is by means of a parallelogram structure 6, comprising four linkage elements 6a (of which two are visible in Fig. 2), connected with the cross-running structural member 3, and can in this way without rotational movement move height-wise in relation to the cross-running structural member 3. The seed container 7 communicates with the seed out feeding device 8, which adapted via a distribution member 8a (in Fig. 1 partly represented by broken lines where it is concealed) to distribute one seed at a time to the seed furrow 9a in the soil 9.

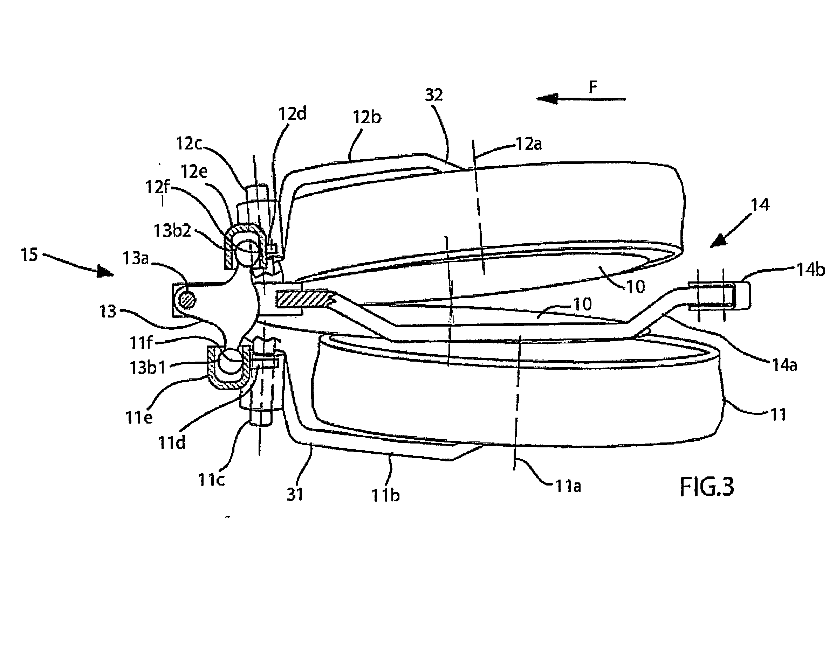

Here reference is also to Fig. 3. The soil cultivating device 2 is adapted to form the seed furrow 9a by means of a seed furrow forming means in the form of two rotatable discs 10 (of which only one is visible in Fig. 2). The discs 10 are in this example placed beside each other in essentially the same position in the intended direction of travel F of the machine. Alternatively however the discs 10 can be displaced relative to each other in the intended direction of travel of the machine. In Fig. 2 the discs are angled relative to each other and orientated so that they diverge upwards and backwards relative to each other. The discs 10 are at use of the machine adapted during rotation to partly intrude into the soil to a predeterminable depth D (Fig. 2), which is adjustable in ways that are described below, and through the mentioned relative divergence displace soil to the sides for formation of the seed furrow 9a, wherein a lower orifice on the seed distribution member 8a is disposed just behind the intrusion of the discs 10 in the soil 9. The relative divergence of the discs backwards and upwards means that their peripheries are closest to each other in the area where they intrude into the soil.

The soil cultivating device 2 in this example also comprises after-cultivating members 202, adapted to close the seed furrow 9a. Furthermore, the row sowing entity 2 can also comprise here not shown fore-cultivating members, and not shown protective members between the lower orifice on the distribution member 8a and the engagement of the discs 10 with the soil 9.

The soil cultivating device 2 comprises two support wheels 11, 12, with a carrying function for the discs 10, the seed out feeding device 8 and the seed container 7. The support wheels 11, 12 are disposed on each side of the pair of discs 10, wherein the wheel axles 11 a, 12a of the support wheels 11, 12 are disposed somewhat behind the disc axles 10a in the intended direction of travel F of the machine (Figs. 2, 3). The area for engagement of the discs 10 with the soil 9 is disposed laterally approximately midway between the support wheels 11, 12. In this presentation the support wheels are also referred to individually as the first support wheel 11 and the second support wheel 12.

The support wheels 11, 12 are coupled to each other by means of a coupling device 15 described more closely below, comprising a first coupling member 31 and a second coupling member 32 for the first and the second support wheel 11, 12, respectively, and a linkage member 13. The first and the second coupling member 31, 32 comprise a first and second connection member 11b, 12b, respectively, and a first and a second attachment member 11d, 12d, respectively. Each support wheel 11, 12 is at its wheel axle 11a, 12a fastened at a free end of one of the connection members 11b, 12b. The coupling members 31, 32, and thereby the connection members 11b, 12b, are swivelling arranged at respective coupling member axles 11c, 12c which are orientated at a small angle to the cross-running direction of the machine 1. Each connection member 11b, 12b is in this embodiment provided as a carrying arm which at its ends is connected with one of the coupling member axles 11c, 12c and one of the wheel axles 11a, 12a, respectively.

In this embodiment respective coupling member axle 11c, 12c is disposed in relation to respective wheel axle 11a, 12a farther forwards in the intended direction of travel F of the machine and higher up from the soil, as is specified in Swedish patent application no. 0700678-6, submitted by the same applicant on 16 March 2007. However the relative position of the coupling member axles 11c, 12c and the wheel axles 11a, 12a can be different. E.g. respective coupling member axle 11c, 12c can be disposed in relation to respective wheel axle 11a, 12a farther back in the intended direction of travel F of the machine and higher up from the soil. As an additional alternative respective coupling member axle 11c, 12c can be disposed in relation to respective wheel axle 11a, 12a farther forward in the intended direction of travel F of the machine and essentially at the same distance from the soil.

As can be seen in Fig. 3, the coupling member axles 11c, 12c, viewed from above, are in this example somewhat angled to each other, but alternatively these axles can be parallel, and according to a special alternative coincide. According to another alternative the coupling member axles 11c, 12c can be disposed somewhat separated in the travel and/or height direction of the machine 1.

The connection members 11b, 12b have in this embodiment the double task of conducting loads from the wheel 11, 12 to other parts of the row sowing entity and, as a part of the mentioned coupling device 15, of contributing to coupling the movements of both wheels 11, 12 as is described more closely below.

As can be seen in Figs. 2 and 3, the connection members 11b, 12b are connected by means of the mentioned two attachment members 11d, 12d and the mentioned linkage member 13. The attachment members 11d, 12d are in this example designed as somewhat elongated regulating arms. Thereby each connection member 11b, 12b is fixedly connected with an attachment member 11d, 12d which extends from the respective coupling member axle 11c, 12c at an angle to the connection member 11b, 12b. The attachment members 11d, 12d are at their respective free ends by means of the linkage member 13 (Fig. 3) connected with each other, and with a regulating member 14 comprising a regulating rod 14a and a handle 14b. Through a user's manoeuvring of the regulating member 14 the linkage member 13 can be displaced so that the attachment members 11d, 12d, and thereby the connection members 11b, 12b, are swung around the respective coupling member axle 11c, 12c. The regulating member 14 can be locked in a number of different positions, and in this way the height of the support wheels 11, 12 in relation to the discs 10 can be regulated so that the depth D of the seed furrow 9a can be adjusted.

The coupling device 15 makes possible a bogie-effect between the support wheels 11, 12 in such a way that if one support wheel 11 moves upwards then the second support wheel 12 moves downwards. For achievement of this bogie-action the linkage member 13 at a central portion is swivelling arranged at a linkage swing centre 13a, displaying a linkage member axle which in this embodiment is orientated at an angle to the connection members 11b, 12b. More precisely the linkage member 13 is connected with a free end of the regulating rod 14a and thereby has a certain mobility in the cross-running direction of the agricultural machine. The linkage member 13 displays a first and a second free end 13b1, 13b2 disposed at a distance from each other across the intended direction of travel F of the machine. At each one of these ends 13b1, 13b2 the linkage member 13 is in engagement with a free end 11e, 12e of respective attachment member 11d, 12d. The free ends 13b1, 13b2 of linkage member 13 comprise respective balls 13b1, 13b2, and the free ends 11e, 12e of respective attachment members 11d, 12d comprise a cylindrical portion orientated across the direction of movement of the free ends 11e, 12e of respective attachment members 11d, 12d, wherein the respective ball 13b1, 13b2 is disposed in the respective cylindrical portion.

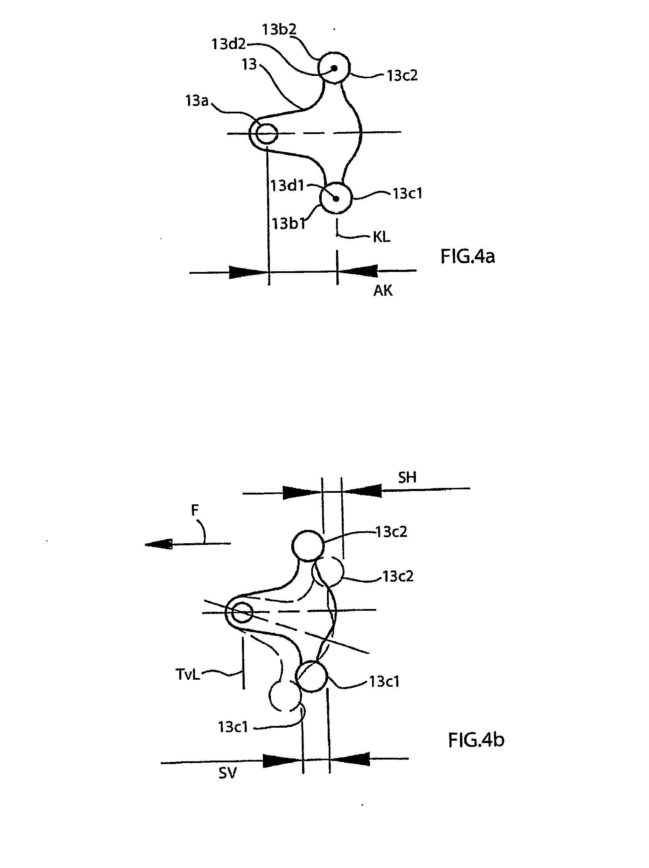

Here reference is also to Fig. 4a. The linkage member 13 displays at the first and the second free end 13b1, 13b2 a first and a second linkage contact area 13c1, 13c2, respectively. In each one of the linkage contact areas 13c1, 13c2 the linkage member 13 is adapted to be in contact with an attachment contact area 11f, 12f (Fig. 3) at the free end 11e, 12e of respective attachment members 11d, 12d. Against a background of the contact points or the contact surfaces between the linkage member 13 and the attachment members 11d, 12d being displaced somewhat when the linkage member is swung around the linkage swing centre 13a, the linkage and attachment contact areas 13e1, 13c2 and 11f, 12f, respectively, are defined here as the areas within which these contact points or contact surfaces can move when the coupling device 15 moves within its movement limitations.

The first and the second linkage contact area 13c1, 13c2 have a knuckling such that they display a first and a second centre of curvature 13d1, 13d2, respectively, in Fig. 4a marked as points. Thereby the linkage swing centre 13a for the linkage member 13 is disposed at a distance AK from a conceptual straight line KL (marked with a broken line in Fig. 4a) which extends through the first and the second centre of curvature 13c1, 13c2. In addition the linkage swing centre 13a is disposed, viewed across the intended direction of travel F of the agricultural machine, between the linkage contact areas 13c1, 13c2.

Here reference is to Figs. 3-5. When the first, in this example the left (viewed in the intended direction of travel F of the machine) support wheel 11 rolls over an obstacle in the form of a soil eminence 9b and moves upwards, the second support wheel 12 moves, by means of the above described coupling device 15, downwards in relation to the discs 10. As can be seen in Fig. 3, when the first support wheel 11 moves upwards, the first connection member 11b is swung upwards and the first attachment member 11d forwards, so that the linkage member 13 is swung, viewed from above clockwise, wherein the second attachment member 12d is swung backwards, the second connection member 12b is swung downwards and the second support wheel 12 moves downwards.

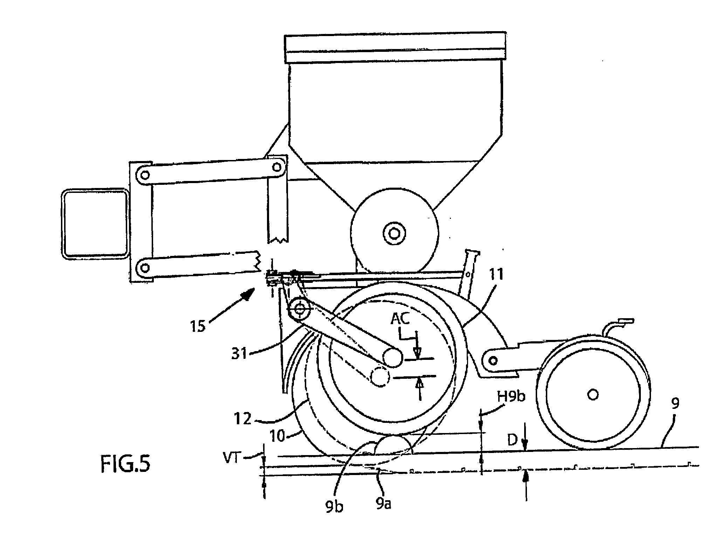

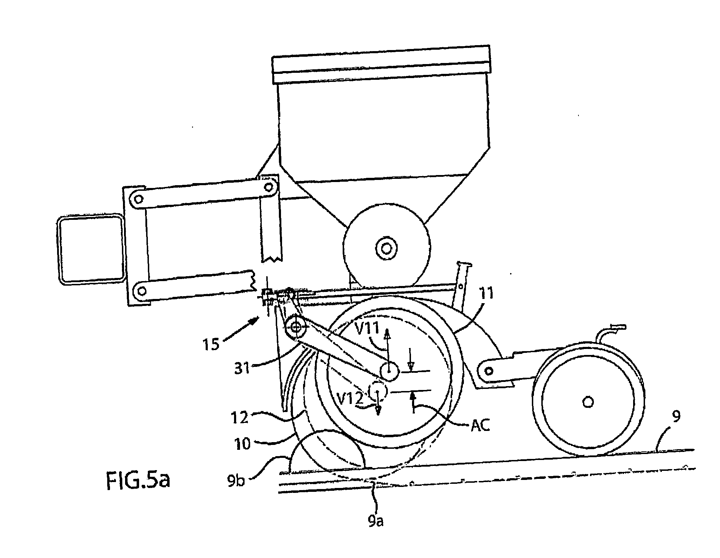

In Fig. 4b the linkage member 13 is shown in the position that it adopts when the support wheels are disposed at the same height, and also in a position (marked with broken lines) that it adopts at a relative displacement between the wheels 11, 12 as is shown in Fig. 5. As mentioned, the linkage swing centre 13a is disposed at a distance AK from the line KL which extends through the first and the second centre of curvature 13d1, 13d2. The linkage swing centre 13a is disposed in relation to the line KL so that when one of the support wheels 11 moves upwards, the attachment contact area 11f moves at the coupling member 31, on which the upward-moving wheel is fastened, closer to a conceptual cross-line TvL which cuts the linkage swing centre 13a and which extends across the direction of movement of the attachment contact area 11f. As a result of this, the way SV (Fig. 4b), for the one of the attachment contact areas 11e that moves closer to the mentioned conceptual cross-line TvL, is longer than the way SH for the attachment contact area 12e that moves away from the mentioned conceptual cross-line TvL. This means that the upward-moving support wheel 11, which is fastened on the one of the coupling members 31 whose attachment contact area 11e moves closer to the mentioned conceptual cross-line TvL, moves farther than the downward-moving support wheel 12. This means that the movement of the wheel 11 that moves upwards in relation to the discs 10 is greater than the movement of the wheel 12 that moves downwards in relation to the discs 10.

Preferably the relationship between the distance AK from the conceptual straight line KL (Fig. 4a) which extends through the first and the second centre of curvature 13d1, 13d2 and the distance from the first to the second centre of curvature 13d1, 13d2 is such that the linkage swing centre 13a remains, across the intended direction of travel F of the agricultural machine, between the linkage contact areas 13c1, 13c2 even in the extreme positions for movements of the coupling device.

As mentioned, the area for engagement of the discs 10 with the soil 9 is disposed approximately midway between the support wheels 11, 12, across the intended direction of travel F of the machine. This means that when one of the support wheels 11 rolls over an eminence on the soil surface, e.g. as is shown in Fig. 5, the discs 10 move upwards (indicated by the inclined portion of the seed furrow 9a in Fig. 5), a way VT that is considerably smaller than that of the upwards displaced support wheel 11. The design of the linkage member 13 according to the above contributes at soil eminences to keeping the vertical movement of the discs small, and thus to the dependence of the sowing depth D on soil irregularities to a corresponding degree being small.

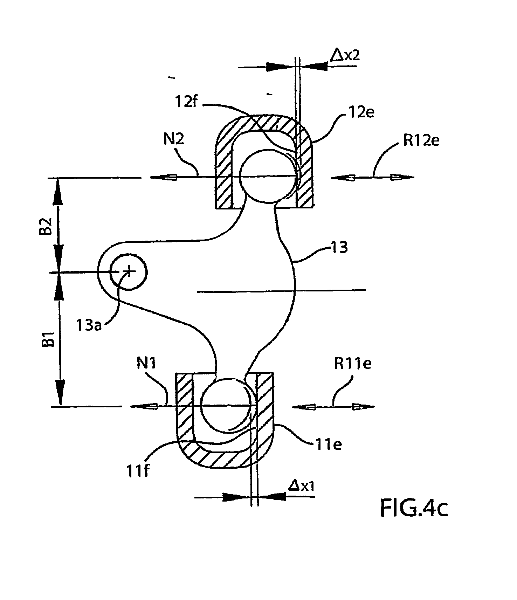

Fig. 4c shows the position of the linkage member 13 at a higher position for the first support wheel 11 in relation to the second support wheel 12. The free end 11e, 12e of the respective attachment members comprises as mentioned a cylindrical portion (sectioned in Fig. 4c), which is orientated primarily across the direction of movement (indicated by the double arrows R11e and R12e in Fig. 4c) of the free end 11e, 12e of respective attachment members 11d, 12d. This means that the first and the second attachment contact area 11f, 12f, respectively (comprising respective areas of the respective internal surface in the respective cylindrical portion), are essentially straight and extend essentially across their respective directions of movement R11e, R12e at movement of the support wheels.

Between on the one side the linkage member 13 and on the other side the first and the second attachment contact area 11f, 12f there act a first and a second normal force N1, N2, respectively. In the position shown in Fig. 4c the distance B1 from the direction of action of the first normal force N1 to the linkage swing centre 13a is greater than the distance B2 from the direction of action of the second normal force N2 to the linkage swing centre 13a. This means that at a higher position for the first support wheel 11 in relation to the second support wheel 12, the first attachment contact area 11f, in comparison with the second attachment contact area 12f, executes a greater movement in relation to the linkage swing centre 13a.

More specifically, at small displacements Δx1, Δx2 of the attachment contact areas 11f, 12f, the ratio B1/B2 between the distance B1 from the direction of action of the first normal force N1 to the linkage swing centre 13a and the distance B2 from the direction of action of the second normal force N2 to the linkage swing centre 13a, is of equal size to the ratio Δx1/Δx2 between the displacement Δx1 for the first attachment contact area 11f and the displacement Δx2 for the second attachment contact area 12f.

In a more general case where the first normal force N1 displays an angle β1 (not shown) to the direction of movement R 11e of the first attachment contact area 11f, and the second normal force N2 displays a angle β2 (not shown) to the direction of movement R12e of the second attachment contact area 12f, the relationship (at small displacements Δx1, Δx2 of the attachment contact areas 11f, 12f) between the distances B1, B2, the displacements Δx1, Δx2 and the angles β1, β2 can be formulated as Δx1/Δx2=(B1/B2)*(cosβ2/cosβ1).

In Fig. 2 the support wheels 11, 12 are disposed in the same vertical position, in this presentation called the neutral position. In the example in Fig. 5 the height H9b of the soil eminence 9b is 100 mm, so that a distance AC in a vertical direction between the centres of the support wheels 11, 12 is 100 mm. Preferably at a soil eminence height H9b of 50 mm, the vertical component of the movement, in relation to the discs 10, of the support wheel 11 that moves upwards is at least 15% greater than the vertical component of the movement, in relation to the discs 10, of the support wheel 12 that moves downwards in relation to the discs 10. This is responded to (see Figs. 3 and 4b) by the movement SV of the attachment contact area 11f of the coupling member 31 with which the upward-moving support wheel 11 is connected being at least 15% greater than the movement SH of the attachment contact area 12f of the coupling member 32 with which the downward-moving support wheel 12 is connected.

Fig. 5a shows a side view corresponding to that shown in Fig. 5, at an upward-moving movement of the first support wheel 11, more precisely when the first support wheel 11 moves up to the highest point on a soil eminence 9b. The design of the coupling device 15 means that the difference between the vertical components V11, V12 of the speed of the support wheels 11, 12 in relation to the discs 10 increases when the height difference AC between the support wheels 11, 12 increases.

The embodiment described above gives a considerable decrease in vertical movement of the discs, and thus an essential decrease in dependence of the sowing depth D on soil irregularities. As an example it can be mentioned that the raising of one of the support wheels 11, 12 by 100 mm causes the discs 10 to be raised by only approx. 36 mm, to be compared with approx. 50 mm in the corresponding case with the solution according to the mentioned patent document US5235922 and with other known solutions.

The solution described here also has the advantage that the load on the wheel that is raised by a soil eminence decreases. As an example it can be mentioned that in the above described embodiment the raising of one of the support wheels 11, 12 by 50, 75 and 100 mm causes the relationship between the load on the raised wheel and the total load on both wheels to be approx. 0.36, 0.30 and 0.24, respectively, to be compared with approx. 0.50 in the corresponding case with the solution according to the mentioned patent document US5235922 and with other known solutions.

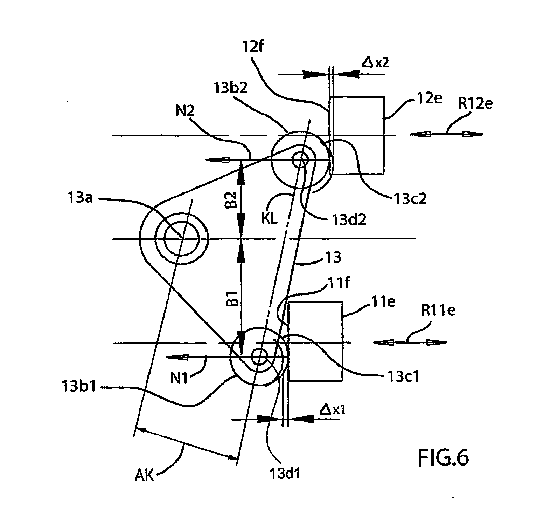

Fig. 6 shows in a view corresponding to the view in Fig. 4c an alternative embodiment of the invention, wherein Fig. 6 shows the position of the linkage member 13 when the first support wheel 11 is disposed in a higher position than the second support wheel 12. This alternative embodiment agrees with that which has been described above, with the exception of the following: The free ends 13b1, 13b2 of linkage member 13 are comprised of respective rollers 13b1, 13b2, which are rotatably connected with other parts of the linkage member 13 via respective axes of rotation that extend in a direction that is normal to a plane in which the linkage member 13 can move around the linkage swing centre 13a. The free end 11e, 12e of respective attachment members 11d, 12d displays a plane surface which comprises an attachment contact area 11f, 12f. Thereby the first and the second attachment contact area 11f, 12f, respectively, are essentially straight and extend essentially across their respective directions of movement R11e, R12e at movement of the support wheels.

The rollers 13b1, 13b2 display a first and a second linkage contact area 13c1, 13c2, respectively, for contact with attachment contact areas 11f, 12f, respectively, and that display a first and a second centre of curvature 13d1, 13d2, respectively, which coincide with the respective axis of rotation for the rollers 13b1, 13b2. Thereby the linkage swing centre 13a for the linkage member 13 is disposed at a distance AK from a conceptual straight line KL which extends through the first and the second centre of curvature 13d1, 13d2.

As in the embodiment above, between on the one side the linkage member 13 and on the other side the first and the second attachment contact area 11f, 12f there act a first and a second normal force N1, N2, respectively. In the position shown in Fig. 6 the distance B1 from the direction of action of the first normal force N1 to the linkage swing centre 13a is greater than the distance B2 from the direction of action of the second normal force N2 to the linkage swing centre 13a. This means that at a higher position for the first support wheel 11 in relation to the second support wheel 12 the first attachment contact area 11f, in comparison to the second attachment contact area 12f, executes a greater movement in relation to the linkage swing centre 13a.

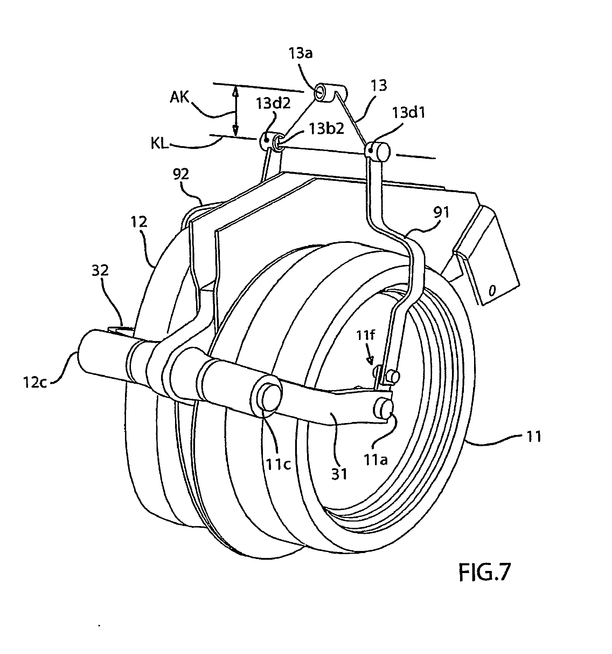

Fig. 7 shows a perspective view of a part of a soil cultivating device according to yet another embodiment of the invention. As in the embodiments described above the coupling device between the first and the second support wheel 11, 12 comprises a first and a second coupling member 31, 32, respectively, which are swingable around a coupling member axle 11c, 12c, respectively, and which are connected with the first and the second support wheel 11, 12, respectively, at their respective wheel axle 11 a, 12a. A linkage member 13 swivelling arranged around a linkage swing centre 13a is disposed above the support wheels 11, 12, and is in jointed connection with the first and the second coupling member 31, 32 via a first and a second intermediate-lying member 91, 92, respectively, each one in the form of an elongated bowed rod 91, 92, which at its ends is in jointed contact with the linkage member 13 and the respective coupling members 31, 32.

At the jointed connection with the respective intermediate-lying organs 91, 92 the respective coupling members 31, 32 display an attachment contact area 11f, 12f, which are comprised of portions of hole edging for the joints at the respective connection, and which are concealed in Fig. 7. The linkage member 13 is connected with the intermediate-lying organs 91, 92 via respective ball-joints, wherein the linkage member displays a ball 13b1, 13b2 for the respective ball-joint (cf. Fig. 3). Each ball 13b1, 13b2 displays a first and a second linkage contact area (not visible in Fig. 7), in which the linkage member 13 is in contact with the first and the second intermediate-lying organ 91, 92, respectively. Thereby the first and the second linkage contact area display a first and at least one second centre of curvature 13d1, 13d2, respectively, the positions of which coincide with the centre of the respective balls 13b1, 13b2 and are marked as points in Fig. 7. The linkage swing centre 13a for the linkage member is disposed at a distance AK from a conceptual straight line KL which extends through the first and the second centre of curvature 13d1, 13d2.

Alternative connections between the linkage member 13 and other parts of the coupling device are naturally possible. E.g. screw connections can be used, wherein the linkage member displays for each one of the coupling members a hole for reception of a bolt or similar. Thereby the linkage contact area 13c1, 13c2 is corresponded to by at least a part of the inner surface of the hole, and the centre of curvature 13d1, 13d2 is disposed essentially in the centre of the hole.

In alternative embodiments the linkage member 13 can be in direct contact with the respective connection members 11b, 12b of the coupling members 31, 32. More precisely, the first and the second linkage contact area 13c1, 13c2 can be in contact with a first and a second attachment contact area 11f, 12f, respectively of the first and the second connection member 11b, 12b, respectively.

## Claims

1. An agricultural machine comprising at least one soil cultivating device (2) comprising a seed furrow forming means (10), for forming a seed furrow (9a) in soil (9) over which the agricultural machine (1) moves, and a first and a second support wheel (11, 12), in addition to which the agricultural machine comprises at least one seed out feeding device (8) for distributing seeds to the seed furrow (9a), in addition to which the support wheels (11, 12) are coupled with each other via a coupling device (15) arranged so that if the first support wheel (11) moves at least partly upwards in relation to the seed furrow forming means, then the second support wheel (12) moves at least partly downwards in relation to the seed furrow forming means, and vice versa, wherein the coupling device (15) is adapted to provide a gearing such that at movement of the support wheels (11, 12) in relation to the seed furrow forming means (10) a vertical component (V11) of the speed in relation to the seed furrow forming means (10) for the higher disposed support wheel (11) is greater than a vertical component (V12) of the speed in relation to the seed furrow forming means (10) for the lower disposed support wheel (12), **characterised in that** the mentioned gearing is such that the difference between the mentioned vertical components (V11, V12) of speeds of the support wheels (11, 12) in relation to the seed furrow forming means (10) increases when the height difference (AC) between the support wheels (11, 12) increases.

2. An agricultural machine according to Claim 1, wherein the coupling device (15) comprises a respective first and a second coupling member (31, 32) which are swivelling arranged around a respective coupling member axle (11c, 12c) and which are connected with the first and the second support wheel (11, 12), respectively, at their respective wheel axle (11a, 12a), in addition to which the coupling device (15) also comprises a swivelling arranged linkage member (13) which is in connection with the first and the second coupling member (31, 32), respectively.

3. An agricultural machine according to Claim 2, wherein the linkage member (13) is in connection with a first and a second attachment contact area (11f, 12f), respectively, of the first and the second coupling member (31, 32), respectively, and the coupling device is arranged so that the linkage member (13), at a movement upwards from the neutral position of the first support wheel (11), executes a swing movement, wherein the movement of the first attachment contact area (11f) is greater than the movement of the second attachment contact area (12f), and vice versa.

4. An agricultural machine according to Claim 3, wherein the linkage member (13) displays a first and a second linkage contact area (13c1, 13c2), in which the linkage member is in connection with the first and the second attachment contact area (11f, 12f), respectively, wherein the first and the second linkage contact area (13c1, 13c2) display at least one first and at least one second linkage centre of curvature (13d1, 13d2), respectively, wherein a linkage swing centre (13a) for the linkage member is disposed at a distance (AK) from a conceptual straight line (KL) which extends through the first and the second linkage centre of curvature (13d1, 13d2).

5. An agricultural machine according to Claim 4, wherein the first and the second attachment contact area (11f, 12f), respectively, extend essentially straight in respective directions across their respective directions of movement (R11e, R12e) at movements of the support wheels (11, 12).

6. An agricultural machine according to any one of the preceding Claims, wherein the gearing provided by the coupling device is such that, at respective movements of the support wheels (11, 12) from the neutral position to a respective position in which a distance in a vertical direction between the centre of the support wheels is 50 mm, the vertical component of the movement, in relation to the seed furrow forming means (10), of the support wheel (11) that moves upwards is at least 15% greater than the vertical component of the movement, in relation to the seed furrow forming means (10), of the support wheel (12) that moves downwards.

7. An agricultural machine according to Claim 6 and any one of Claims 3-5, wherein the movement (SV) of the attachment contact area (11f) of the coupling member (31) with which the upward-moving support wheel (11) is connected is at least 15% greater than the movement (SH) of the attachment contact area (12f) of the coupling member (32) with which the downward-moving support wheel (12) is connected.

## Patentansprüche

1. . Eine Landwirtschaftsmaschine mit mindestens einer Vorrichtung (2) zur Bearbeitung des Bodens, die Mittel (10) zur Bildung von Saatfurehen (9a) im Boden (9), über den sich die Landwirtschafisrnaschine (1) bewegt, umfasst, und einem ersten und einem zweiten Stützrad (11, 12), wobei die genannte Landwirtschaftsmaschine zusätzlich dazu mindestens eine Vorrichtung (8) zur Versorgung mit einer Aussaat zum Verteilen von Saatgütern in der genannten Saatfurche (9a) umfasst, und wobei die Stützräder (11, 12) zusätzlich dazu mit einander über eine Kupplungsvorrichtung (15) gekuppelt sind, die so angeordnet ist, dass sich, wenn sich das erste Stützrad (11) mindestens teilweise nach oben in Bezug auf die Mittel zur Bildung der Saatfurchen bewegt, sich dann das zweite Stützrad (12) mindestens teilweise nach unten in Bezug auf die Mittel zur Bildung der Saatfurchen und umgekehrt bewegt, wobei die Kupplungsvorrichtung (15) dazu geeignet ist, ein Getriebe zur Verfügung zu stellen, so dass bei einer Bewegung der Stützräder (11, 12) in Bezug auf die Mittel zur Bildung der Saatfurchen eine vertikale Komponente (V11) der Geschwindigkeit in Bezug auf die Mitten (10) zur Bildung der Saatfurchen größer ist als eine vertikale Komponente (V12) der Geschwindigkeit in Bezug auf die Mittel (10) zur Bildung der Saatfurchen für das niedriger angeordnete Stützrad (12), **dadurch gekennzeichnet, dass** das erwähnte Getriebe so ausgeführt ist, dass der Unterschied zwischen den erwähnten Stützrädern (11, 12) eine vertikale Komponente (V11) der Geschwindigkeit in, Bezug auf die Mittel (10) zur Bildung der Saatfurchen zunimmt, wenn die Höhendifferenz (AC) zwischen den Stützrädern zunimmt.

2. . Eine Landwirtschaftsmaschine nach Patentanspruch 1, worin die Kupplungsvorrichtung (15) ein jeweiliges erstes und zweites kupplungselernent (31, 32) umfasst, die um eine jeweilige Achse (11c, 12c) des Kupplungselement schwenkbar sind, und welche Elemente mit jeweils dem ersten und dem zweiten Stützrad (11, 12) an ihrer jeweiligen Radachse (11a, 12a) verbunden sind, und wobei zusätzlich dazu die Kupplungsvorrichtung (15) auch ein Verbindungselement (13), das schwenkbar angeordnet ist, umfassen, das sich in Verbindung mit jeweils dem ersten und dem zweiten Kupplungselement (31, 32) befindet.

3. . Eine Landwirtschaftsmaschine nach Patentanspruch 2, worin das Verbindungselement (13) jeweils mit einer ersten und einer zweiten Befestigungskontaktflãche (11f, 12f) jeweils des ersten und des zweiten Kupplungselements (31, 32) verbunden ist und wobei das Verbindungselement bei einer Bewegung nach oben von der neutralen Position des ersten Stützrades (11) eine Schwenkbewegung ausführt, wobei die Bewegung der ersten Befestigungskontaktfläche (11f) größer ist als die Bewegung der zweiten Befestigungskontaktfläche (12f) und umgekehrt.

4. . Eine Landwirtschaftsmaschine nach Patentanspruch 3, worin das Verbindungselement (13) eine erste und eine zweite Verbindungskontaktfläche (13c1, 13c2) aufweist, in welcher das Verbindungselement mit der jeweiligen ersten und zweiten Befestigungskontaktfläche (11f,12f) verbunden ist, wobei die erste und die zweite Verbindungskontaktfläche (13c1,13c2) jeweils mindestens ein erstes und ein zweites Krümmungszentrum (13d1, 13d2) aufweist, wobei ein Verbindungsschwenkzentrum (13a) in einer Entfernung (AK) von einer konzeptuellen geraden Linie (KL) angeordnet ist, welche sich durch das erste und das erste Verbindungskrümmungszentrum (13d1, 13d2) erstreckt.

5. . Eine Landwirtschaftsmaschine nach Patentanspruch 4, worin sich jeweils die erste und die zweite Befestigungskontaktfläche (11f,12f) im Wesentlichen gerade in entsprechenden Richtungen quer zu ihren entsprechenden Bewegungsrichtungen (R11e, R12e) der Stützräder (11, 12) verläuft.

6. . Eine landwirtschaftsmaschine nach irgendeiner der vorangehenden Patentansprüche, wobei das durch die Kupplungsvorrichtung zur Verfügung gestellte Getriebe so ausgeführt ist, dass bei entsprechenden Bewegungen der Stützräder (11, 12) aus der neutralen Position in eine entsprechende Position, in welcher eine Entfernung in einer vertikalen Richtung zwischen dem Zentrum der Stützräder 50 mm ist, die vertikale Komponente der Bewegung, in Bezug auf die Mittel (10) zur Bildung der Saatfurchen, des Stützrades (11), das sich nach oben bewegt, mindestens 15 % größer als die vertikale Komponente der Bewegung, in Bezug auf die Mittel (10) zur Bildung der Saatfurchen, des Stützrades (12), das sich nach unten bewegt

7. . Eine Landwirstchaftsmaschine mach Patentanspruch 6 und irgendeinem der Patentansprüche 3 bis 5, wobei die Bewegung, (SV) der Befestigungskontaktfläche (11f) des Kupplungselements (31), mit dem das sich nach oben bewegende stützrad (11) verbunden ist, mindestens 15 % größer ist als die Bewegung (SH) der Befestigungskontaktfläche (12f) des Kupplungselements (32), mit dem das sich nach unten bewegende Stützrad (12) verbunden ist.

## Revendications

1. Machine agricole comprenant au moins un dispositif de culture du sol (2) comprenant des moyens de formation d'un sillon d'ensemencement (10), pour former un sillon d'ensemencement (9a) dans le sol (9), sur lequel la machine agricole (1) se déplace, et une première et une seconde roues de support (11, 12), en plus de quoi la machine agricole comprend au moins un dispositif d'alimentation des semences (8) pour distribuer les semences dans le sillon d'ensemencement (9a), en plus de quoi les roues de support (11, 12) sont raccordées l'une à l'autre par un dispositif d'accouplement (15) disposé de sorte que, si la première roue de support (11) se déplace au moins partiellement vers le haut relativement aux moyens de formation d'un sillon d'ensemencement, alors la seconde roue de support (12) se déplace au moins partiellement vers le bas relativement aux moyens de formation d'un sillon d'ensemencement, et inversement, dans laquelle le dispositif d'accouplement (15) est adapté pour fournir un engrenage de sorte que, lors du mouvement des roues de support (11, 12) relativement aux moyens de formation d'un sillon d'ensemencement (10), un composant vertical (V11) de la vitesse relativement aux moyens de formation d'un sillon d'ensemencement (10) pour la roue de support disposée plus haut (11) est supérieur à un composant vertical (V12) de la vitesse relativement au moyen de formation d'un sillon d'ensemencement (10) pour la roue de support disposée plus bas (12), **caractérisée en ce que** l'engrenage mentionné est tel que la différence entre les composants verticaux mentionnés (V11, V12) des vitesses des roues de support (11, 12) relativement aux moyens de formation d'un sillon d'ensemencement (10) augmente quand la différence de hauteur (AC) entre les roues de support (11, 12) augmente.

2. Machine agricole selon la revendication 1, dans laquelle le dispositif d'accouplement (15) comprend un premier et un second éléments d'accouplement respectifs (31, 32) qui pivotent, étant disposés autour d'un essieu d'élément d'accouplement respectif (11c, 12c) et qui sont connectés avec la première et la seconde roue de support (11, 12), respectivement, au niveau de leur essieu de roue respectif (11a, 12a), en plus de quoi le dispositif d'accouplement (15) comprend également un élément de liaison disposé de façon pivotante (13) qui est en connexion avec le premier et le second éléments d'accouplement (31, 32) respectivement.

3. Machine agricole selon la revendication 2, dans lequel l'élément de liaison (13) est en connexion avec une première et une seconde zones de contact de fixation (11f, 12f), respectivement, du premier et du second éléments d'accouplement (31, 32), respectivement et le dispositif d'accouplement est disposé de sorte que l'élément de liaison (13), dans un mouvement vers le haut depuis la position neutre de la première roue de support (11), exécute un mouvement oscillant, dans lequel le mouvement de la première zone de contact de fixation (11f) est supérieur au mouvement de la seconde zone de contact de fixation (12f) et inversement.

4. Machine agricole selon la revendication 3, dans laquelle l'élément de liaison (13) présente une première et une seconde zones de contact de liaison (13c1, 13c2), dans laquelle l'élément de liaison est en connexion avec la première et la seconde zones de contact de fixation (11f, 12f) respectivement, dans laquelle la première et la seconde zones de contact de liaison (13c1, 13c2) présentent au moins un premier et au moins un second centres de courbure de liaison (13d1, 13d2), respectivement, dans lequel un centre d'oscillation de liaison (13a) pour l'élément de liaison est disposé à une distance (AK) à partir d'une ligne droite conceptuelle (KL) qui s'étend à travers le premier et le second centres de courbure de liaison (13d1, 13d2).

5. Machine agricole selon la revendication 4, dans laquelle la première et la seconde zones de contact de fixation (11f, 12f) respectivement, s'étendent essentiellement droites dans des directions respectives à travers leurs directions respectives de mouvement (R11e, R12e) lors de mouvements des roues de support (11, 12).

6. Machine agricole selon l'une quelconque des revendications précédentes, dans laquelle l'engrenage fourni par le dispositif d'accouplement est tel qu'en cas de mouvements respectifs des roues de support (11, 12) depuis la position neutre vers une position respective, dans laquelle une distance dans une direction verticale entre le centre des roues de support est de 50 mm, le composant vertical du mouvement, relativement aux moyens de formation d'un sillon d'ensemencement (10), de la roue de support (11) qui se déplace vers le haut est d'au moins 15 % supérieur au composant vertical du mouvement, relativement aux moyens de formation d'un sillon d'ensemencement (10), de la roue de support (12) qui se déplace vers le bas.

7. Machine agricole selon la revendication 6 et l'une quelconque des revendications 3-5, dans laquelle le mouvement (SV) de la zone de contact de fixation (11f) de l'élément d'accouplement (31), avec lequel la roue de support se déplaçant vers le haut (11) est connectée, est d'au moins 15 % supérieur au mouvement (SH) de la zone de contact de fixation (12f) de l'élément d'accouplement (32) avec lequel la roue de support se déplaçant vers le bas (12) est connectée.
